# NEW EUROPEAN PATENT SPECIFICATION

(11) **EP 0 527 598 B2**
(45) Date of publication and mention of the opposition decision: **07.07.1999**
(45) Mention of the grant of the patent: 27.12.1995
(21) Application number: 92307207.8
(22) Date of filing: 06.08.1992
(51) Int. Cl.: B60C 5/14

(54) **Inner lining for tyre**
Reifeninnenschicht
Couche intérieure pour bandage pneumatique

(30) Priority: 09.08.1991 DE 4126451
(43) Date of publication of application: 17.02.1993
(73) Proprietor: Dunlop GmbH, 63450 Hanau (DE)
(72) Inventor: Miska, Klaus, W-6451 Hammersbach-Markobel (DE)
(74) Representative: Manitz, Finsterwald & Partner

(56) References cited:
- EP-A- 0 337 279
- DE-C- 2 416 185
- DE-U- 1 759 607
- GB-A- 2 023 516
- GB-A- 2 072 576
- US-A- 3 062 257
- US-A- 3 299 934
- US-A- 4 928 741

## Description

This invention relates to a method of manufacturing a vehicle tyre having an impermeable inner liner in which an essentially cylindrical carcass jacket is formed into a toroidal tyre blank and is subsequently vulcanised in a heated mould.

Such tyres are generally known as tubeless tyres. The air impermeable layer provided at the inner side of the tyre is thereby formed by a rubber lining. This rubber lining must have an adequate thickness in order to ensure the required impermeability to air. For this reason the rubber lining can account for a weight component of approximately 10% of the total weight of a motorcar tyre. In some cases a layer must be applied during the manufacture of the tyre between the rubber lining and the inner side of the tyre as a bond promoter in order to ensure a good connection of the rubber lining with the carcass materials present in the inner side of the tyre.

The reduction of weight of the air impermeable inner liner layer by spraying a polymer film to the inside of the body of the tyre prior to curing the tyre is known, for example, from US-A-4928741.

It is the object of the present invention to improve this known method.

This object is satisfied in the method of the invention in that the air impermeable inner liner is formed by spraying material to form a film onto the inner side of the carcass jacket prior to shaping of the tyre blank and subsequent curing of the tyre, the spraying forming zones of different thickness of the film, with larger film thickness applied in zones which are subjected to extension during shaping of the tyre blank, shaping the tyre so that in the shaped tyre blank a substantially uniform film thickness results around the tyre which is integrally connected with the tyre blank and curing the tyre. As an alternative to this the film can, in accordance with claim 2, also be sprayed onto the flat carcass material. In this process, the air impermeable elastic film can be rapidly applied automatically.

In order to permit problemless release of the tyre from the tyre shaping lug in the curing press a parting agent or release agent can be applied to the film.

The spray film can consist of a suitable plastic which bonds with the inside of the tyre during heating, i.e. becomes a component of the inner wall of the tyre and thus forms a very thin air impermeable layer. This air impermeable layer thereby has a low weight. Moreover, the application of the air impermeable layer as a sprayed film can be carried out quickly and economically and, for example, existing spray devices which serve for spraying into the tyre a release agent, may be used for the application of the spray film.

It is particularly favourable when the spray film consists of a plastic with a temperature resistance up to ca. 200°C, so that the spray film can, on the one hand, bond well with the carcass material and is, on the other hand, not damaged on heating of the tyre.

A further advantageous embodiment is set forth in the remaining claim.

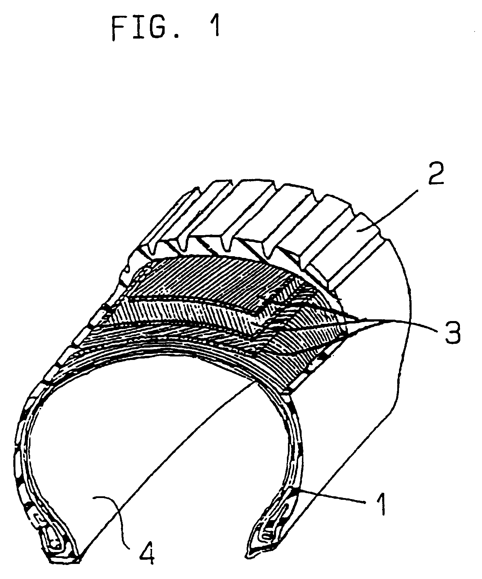

The invention will now be explained in more detail by way of an example with reference to the drawing. In the drawing the single figure shows the assembly of a vehicle tyre in accordance with the present invention.

A vehicle tyre comprises a carcass 1 and also a tread strip 2 and a reinforcement ply 3, arranged therein and consisting of several layers. An air impermeable layer 4 is provided on the inner side of the tyre and consists of an elastic film which is sprayed onto the cylindrical carcass jacket 1 or onto the carcass material used for forming the tyre blank and bonded to the inner wall of the tyre during the heating process.

The spray film consists of a plastic with a temperature resistance up to ca. 200°C. The thickness of the air impermeable layer 4 amounts to less than 0.5 mm; preferably the thickness lies in the range from about 0.1 mm to 0.3mm.

The application of the elastic layer can take place in two ways, namely the spraying of a film which preferably consists of plastic onto the radially inwardly disposed side of the cylindrical carcass material which is not yet formed into a toroidal tyre blank or onto the flat carcass material from which the cylindrical carcass jacket is formed.

The toroidal tyre blank is shaped after the spraying of the layer, and subsequently vulcanised in a heated mould, with the elastic layer being integrally bonded with the inner side of the tyre blank. The zones of the sprayed-on film which are subject to extension during subsequent shaping of the tyre blank, have a slightly larger thickness than the remaining regions of the film. In this way, the thinning of the layer in the extension regions brought about by the expansion can be controlled so that in the finished green tyre a thickness of the elastic layer is present which is substantially uniform over the cross-section.

For better separation of the heating bag or bellows inserted into the tyre during heating from the inner side of the tyre blank after the heating process, a partition or separating agent is applied to the film prior to curing. The partition or separating agent can be applied at the same time or alternatively thereto also to the heating bellows.

## Claims

1. A method of manufacturing a vehicle tyre having an impermeable inner liner (4) in which an essentially cylindrical carcass jacket (1) is formed into a toroidal tyre blank and is subsequently vulcanised in a heated mould, characterised in that the air impermeable inner liner (4) is formed by spraying material to form a film onto the inner side of the carcass jacket (1) prior to shaping of the tyre blank and subsequent curing of the tyre, the spraying forming zones of different thickness of the film, with larger film thickness applied in zones which are subjected to extension during shaping of the tyre blank, shaping the tyre so that in the shaped tyre blank a substantially uniform film thickness results around the tyre which is integrally connected with the tyre blank and curing the tyre.

2. A method of manufacturing a vehicle tyre according to claim 1, characterised in that the spraying of the impermeable film is carried on the flat carcass material before assembly of the cylindrical carcass jacket (1).

3. A method in accordance with either of claims 1 or 2, characterised in that a parting agent is applied after spraying of the film to provide mould release.

4. A vehicle tyre manufactured according to claim 1, 2 or 3, characterised by the thickness of the sprayed air impermeable film (4) being in the range of 0.1 to 0.3 mm.

5. A vehicle tyre according to claim 4, characterised by the film (4) comprising a resilient plastic which is resistant to temperatures of up to 200°C.

## Patentansprüche

1. Verfahren zur Herstellung eines Fahrzeugreifens, der eine luftundurchlässige Innenseele (4) aufweist, bei dem ein im wesentlichen zylindrischer Karkaßmantel (1) zu einem torusförmigen Reifenrohling ausgebildet und anschließend in einer beheizten Form vulkanisiert wird, dadurch gekennzeichnet, daß die luftundurchlässige Innenseele (4) gebildet wird, indem ein Material zur Ausbildung eines Films auf die Innenseite des Karkaßmantels (1) gesprüht wird, bevor der Reifenrohling geformt und anschließend der Reifen vulkanisiert wird, wobei das Aufsprühen Bereiche mit unterschiedlicher Dicke des Films bildet, wobei eine größere Filmdicke auf Bereiche aufgebracht wird, die während der Formung des Reifenrohlings einer Ausdehnung ausgesetzt sind, daß der Reifen derart geformt wird, daß sich in dem geformten Reifenrohling eine im wesentlichen gleichmäßige Filmdicke um den Reifen herum ergibt, die einstückig mit dem Reifenrohling verbunden ist, und daß der Reifen vulkanisiert wird.

2. Verfahren zur Herstellung eines Fahrzeugreifens nach Anspruch 1, dadurch gekennzeichnet, daß das Aufsprühen des luftundurchlässigen Films auf das ebene Karkaßmaterial vor dem Zusammenbau des zylindrischen Karkaßmantels (1) durchgeführt wird.

3. Verfahren nach Anspruch 1 oder 2, dadurch gekennzeichnet, daß nach dem Aufsprühen des Films ein Trennmittel auf den Film aufgebracht wird, um ein Lösen aus der Form zu ermöglichen.

4. Fahrzeugreifen, der nach Anspruch 1, 2 oder 3 hergestellt ist, dadurch gekennzeichnet, daß die Dicke des aufgesprühten luftundurchlässigen Films (4) im Bereich von 0,1 bis 0,3 mm liegt.

5. Fahrzeugreifen nach Anspruch 4, dadurch gekennzeichnet, daß der Film (4) einen elastischen Kunststoff umfaßt, der gegenüber Temperaturen bis zu 200°C beständig ist.

## Revendications

1. Procédé de fabrication d'un pneumatique pour véhicule ayant un revêtement interne imperméable (4) dans lequel une enveloppe de carcasse pratiquement cylindrique (1) est mise sous forme d'une ébauche de pneumatique de configuration toroïdale et est ensuite vulcanisée dans un moule chauffé, caractérisé en ce que le revêtement interne imperméable à l'air (4) est formé par pulvérisation d'un matériau pour former un film sur la face interne de l'enveloppe de carcasse (1) avant la formation de l'ébauche du pneumatique et avant la vulcanisation subséquente du pneumatique, la pulvérisation formant des zones d'épaisseurs différentes du film, une plus grande épaisseur de couche étant appliquée dans les zone qui sont soumises à un allongement lors de la mise en forme de l'ébauche du pneumatique, par mise en forme du pneumatique de telle sorte que, dans l'ébauche mise en forme, une épaisseur pratiquement uniforme est obtenue sur le pneumatique qui est solidaire de l'ébauche du pneumatique, et par vulcanisation du pneumatique.

2. Procédé de fabrication d'un pneumatique pour véhicule selon la revendication 1, caractérisé en ce que la pulvérisation du film imperméable est effectuée sur le matériau de carcasse plat avant l'assemblage de l'enveloppe de carcasse cylindrique (1).

3. Procédé de fabrication selon l'une quelconque des revendications 1 et 2, caractérisé en ce qu'un agent de démoulage est appliqué après pulvérisation du film pour assurer le démoulage.

4. Pneumatique pour véhicule selon la revendication 1, 2 ou 3, caractérisé en ce que l'épaisseur du film imperméable à l'air (4) pulvérisé est comprise dans l'intervalle de 0,1 à 0,3 mm.

5. Pneumatique pour véhicule selon la revendication 4, caractérisé en ce que le film (4) comprend une matière plastique réfractaire qui résiste à des températures allant jusqu'à 200°C.
